# EUROPEAN PATENT APPLICATION

(11) **EP 2 679 329 A2**
(43) Date of publication of application: **01.01.2014**
(21) Application number: 13155147.5
(22) Date of filing: 14.02.2013
(51) Int. Cl.: B23K 11/31, B25J 19/00

(54) **Spot welding system and control device for spot welding robot**

(30) Priority: 29.06.2012 JP 2012146784
(71) Applicant: Kabushiki Kaisha Yaskawa Denki, Kitakyushu-shi, Fukuoka 806-0004 (JP)
(72) Inventor: Takemoto, Fumihiko, Fukuoka 806-0004 (JP); Miyazato, Toshitaka, Fukuoka 806-0004 (JP); Mine, Michiharu, Fukuoka 806-0004 (JP)
(74) Representative: Grünecker, Kinkeldey, Stockmair & Schwanhäusser

(57) **Abstract**

A spot welding system (1) according to an embodiment includes a spot welding robot (2) and a control device (4, 4A). The spot welding robot (2) has a plurality of joint axes (J1 to J6) and includes a plurality of motors (M1 to M6) in correspondence with the joint axes (J1 to J6). The control device (4, 4A) drives the motors (M1 to M6). Furthermore, the control device (4, 4A) includes a capacitor (C10, C10A, C10C) that accumulates regenerative electric power generated from the motor (M1 to M6).

## Description

### FIELD

The embodiment discussed herein is directed to a spot welding system and a control device for a spot welding robot.

### BACKGROUND

Many spot welding robots are arranged on a production line for automobiles or the like to automatically perform welding operations in order to raise productivity. This technique has been known as disclosed in, for example, Japanese Laid-open Patent Publication No. 2008-213020.

The spot welding robot is, for example, a large-sized robot that holds a weighty spot welding gun. In some cases, several hundred of spot welding robots can be used on one production line. Therefore, electric power saving in a spot welding process is a problem important for the whole electric power saving of the production line.

According to an aspect of an embodiment, it is an object of the embodiment to provide a spot welding system and a control device for a spot welding robot that can achieve electric power saving.

### SUMMARY

A spot welding system according to an embodiment includes a spot welding robot and a control device. The spot welding robot has a plurality of joint axes and includes a plurality of motors in correspondence with the joint axes. The control device drives the motors. Furthermore, the control device includes a capacitor that accumulates regenerative electric power generated from the motor.

According to an aspect of an embodiment, it is possible to provide a spot welding system and a control device for a spot welding robot that can achieve electric power saving.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

FIG. 1 is a schematic diagram illustrating a configuration example of a spot welding system according to an embodiment;

FIG. 2 is a block diagram illustrating a configuration example of a control device according to the embodiment;

FIG. 3 is a diagram illustrating a configuration example of a motor drive unit, a converter unit, and a capacitor unit according to the embodiment;

FIG. 4 is a diagram illustrating a relationship between a regenerative electric power and a driving state of a link body by a motor;

FIG. 5 is a schematic diagram illustrating an example of an attachment configuration of the capacitor unit;

FIGs. 6A to 6C are diagrams explaining attachment and detachment of the capacitor unit;

FIGs. 7 and 8 are diagrams illustrating another configuration example of the capacitor unit; and

FIG. 9 is a diagram illustrating an example of a control device in which capacitor units are respectively arranged for motor drive units.

### DESCRIPTION OF EMBODIMENT

Hereinafter, a spot welding system and a control device for a spot welding robot according to an embodiment of the present disclosure will be explained in detail with reference to the accompanying drawings. In addition, the embodiment disclosed below is not intended to limit the present invention.

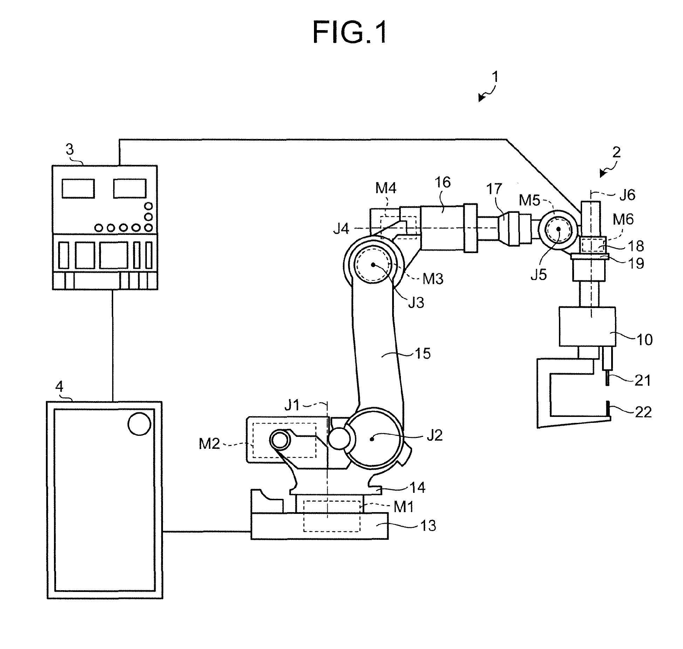

FIG. 1 is a schematic diagram illustrating a configuration example of a spot welding system 1 according to an embodiment. As illustrated in FIG. 1, the spot welding system 1 according to the present embodiment includes a spot welding robot 2, a welding power source 3, and a control device 4.

The spot welding robot 2 is a multi-joint robot that has a plurality of joint axes J1 to J6. The spot welding robot 2 includes a base 13, a swiveling unit 14, a lower arm 15, an upper arm 16, a first wrist 17, a second wrist 18, and a wrist flange 19, which are pivotably coupled to one another.

More specifically, the swiveling unit 14 is connected to the base 13 to be rotatable around the joint axis J1. The lower arm 15 is connected to the swiveling unit 14 to be rotatable around the joint axis J2 substantially vertical to the joint axis J1. Moreover, the upper arm 16 is connected to the lower arm 15 to be rotatable around the joint axis J3 substantially parallel to the joint axis J2. The first wrist 17 is connected to the upper arm 16 to be rotatable around the joint axis J4 substantially vertical to the joint axis J3.

The second wrist 18 is connected to the first wrist 17 to be rotatable around the joint axis J5 that is substantially vertical to the joint axis J4. The wrist flange 19 is connected to the second wrist 18 to be rotatable around the joint axis J6 substantially vertical to the joint axis J5.

The spot welding robot 2 includes motors M1 to M6 (hereinafter, they can be referred to as "motors M") that are arranged in correspondence with the joint axes J1 to J6. The motors M are driven by the control device 4. The motors M are, for example, permanent magnet type rotary electric machines. The permanent magnet type rotary electric machine includes, for example, a rotor that includes a plurality of permanent magnets arranged in a circumferential direction of a rotor core and a stator that is placed facing an outer circumferential surface of the rotor via a gap.

A spot welding gun 10 is attached to the leading end of the spot welding robot 2. The position, angle, direction, and the like of the spot welding gun 10 are controlled by controlling the motors M by the control device 4.

The spot welding gun 10 includes a movable electrode 21 and a fixed electrode 22 that are arranged to face each other. When performing a spot weld, the control device 4 controls the spot welding gun 10 to sandwich a workpiece that is a welded member between the movable electrode 21 and the fixed electrode 22, and supplies power from the welding power source 3 to the spot welding gun 10 to let currents flow between the electrodes 21 and 22 for a predetermined time.

When the weld is completed, the control device 4 displaces the movable electrode 21 in a direction separating from the fixed electrode 22 to release the workpiece, and activates the spot welding robot 2 to displace the spot welding gun 10 to the next welding point.

The series of operations are set in an operation program that is previously stored in the control device 4. An operator makes the control device 4 execute this operation program and thus makes the spot welding robot 2 execute a spot welding operation.

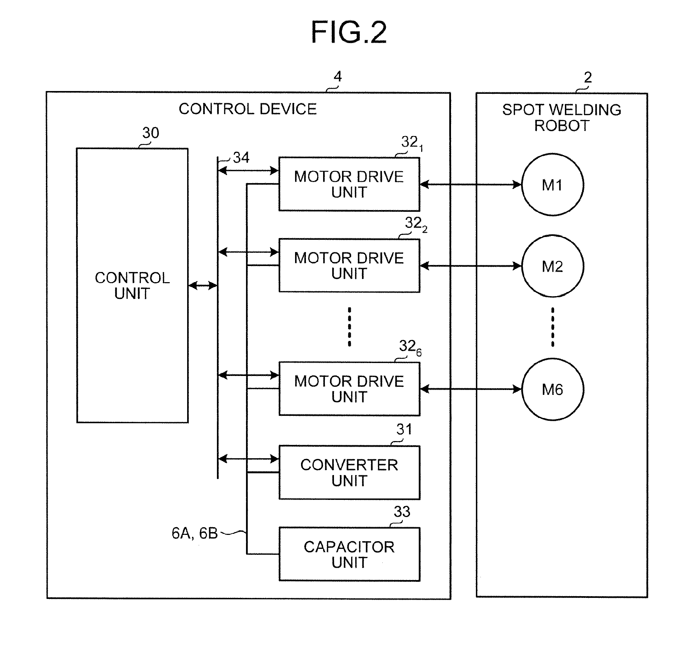

Herein, the configuration of the control device 4 will be explained. FIG. 2 is a block diagram illustrating a configuration example of the control device 4. As illustrated in FIG. 2, the control device 4 includes a control unit 30, a converter unit 31, motor drive units 32₁ to 32₆ (hereinafter, they can be referred to as motor drive units 32), and a capacitor unit 33.

The control unit 30, the converter unit 31, and the motor drive units 32 are interconnected by a communication bus 34. Moreover, the converter unit 31, the motor drive units 32, and the capacitor unit 33 are interconnected by DC bus bars 6A and 6B. In the present embodiment, the DC bus bars 6A and 6B are formed on a mother board that is not illustrated. The converter unit 31, the motor drive units 32, and the capacitor unit 33 are detachably connected to the DC bus bars 6A and 6B via connectors that are formed on the mother board.

The control unit 30 stores therein the operation program and makes an internal CPU read out and execute the operation program to control the motor drive units 32₁ to 32₆, the movable electrode 21 of the spot welding gun 10, and the welding power source 3.

The motors M1 to M6 of the spot welding robot 2 are driven by this control to change the position, angle, direction, and the like of the spot welding gun 10, and then the spot welding gun 10 performs the spot weld.

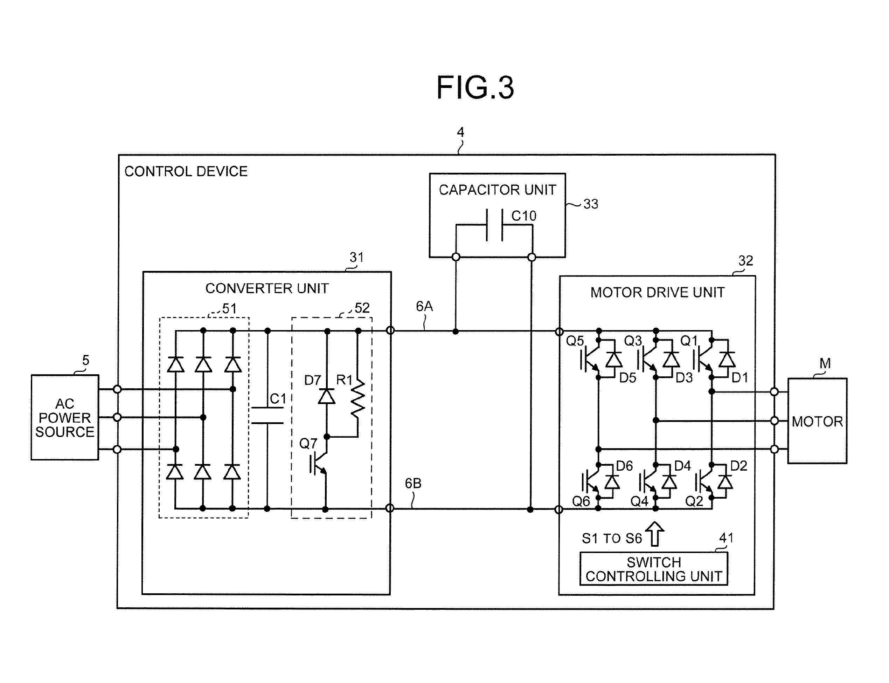

FIG. 3 is a diagram illustrating a configuration example of the converter unit 31, the motor drive unit 32, and the capacitor unit 33.

As illustrated in FIG. 3, the converter unit 31 includes a rectifier circuit 51 consisting of six bridge-connected diodes, a smoothing capacitor C1, and a regenerative power processing unit 52. The converter unit 31 rectifies a three-phase AC voltage from an AC power source 5 by using the rectifier circuit 51 and smoothes the rectified voltage by using the smoothing capacitor C1 to convert the three-phase AC voltage into a DC voltage.

The regenerative power processing unit 52 includes a switching element Q7 and a resistor R1, which are serially connected and are arranged between the DC bus bars 6A and 6B. When a regenerative electric power to be described below is supplied from the motor drive unit 32, the regenerative power processing unit 52 is a protection circuit that suppresses the voltage of the DC bus bars 6A and 6B to a value not more than a predetermined value. Herein, the switching element Q7 is, for example, a semiconductor element such as MOSFET and IGBT.

In the regenerative power processing unit 52, the switching element Q7 is turned on by a control unit that is not illustrated when the voltage of the DC bus bars 6A and 6B exceeds the predetermined value. As a result, a part of the regenerative electric power is consumed by the resistor R1 and thus the voltage of the DC bus bars 6A and 6B is suppressed to a value not more than the predetermined value. A protection diode D7 is further connected to the resistor R1 in parallel. When the switching element Q7 is turned off, the protection diode D7 suppresses a surge voltage caused by wiring inductance of the resistor R1.

The motor drive unit 32 includes three-phase bridge-connected switching elements Q1 to Q6, diodes D1 to D6 connected to the switching elements Q1 to Q6 in antiparallel, and a switch controlling unit 41.

The switching elements Q1 to Q6 are controlled to be turned on or off on the basis of switch driving signals S1 to S6 from the switch controlling unit 41. As a result, DC power from the converter unit 31 is converted into AC power, and the AC power is supplied to the motor M. Moreover, the switching elements Q1 to Q6 are, for example, are self-arc-extinguishing semiconductor elements such as IGBT and MOSFET.

When the AC power is supplied from the motor drive unit 32 to the motor M, the motor M rotates the corresponding link body around the joint axis. For example, the motor M1 rotates the swiveling unit 14 around the joint axis J1 by using the AC power from the motor drive unit 32₁ and the motor M2 rotates the lower arm 15 around the joint axis J2 by using the AC power from the motor drive unit 32₂.

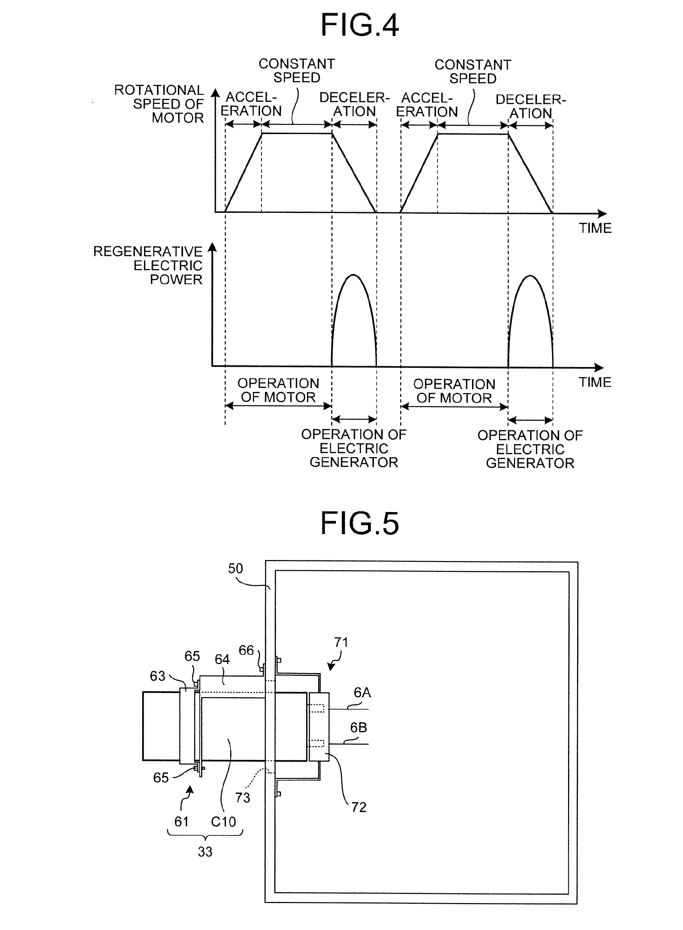

As described above, the motor M drives the corresponding link body as a load. Meanwhile, when an operator wants to stop the drive of the link body, a regenerative electric power is supplied to the motor drive unit 32. FIG. 4 is a diagram illustrating a relationship between a regenerative electric power and a driving state of the link body by the motor M.

As illustrated in FIG. 4, the motor M that is supplied with the AC power from the motor drive unit 32 rotates the link body, and then decelerates the rotation of the link body when the rotation position of the link body approaches an objective position. In the case of the deceleration, the motor M operates as an electric generator due to the kinetic energy of the link body and thus a regenerative electric power is supplied from the motor M to the motor drive unit 32. The regenerative electric power is converted into a direct current by the motor drive unit 32 and is output to the DC bus bars 6A and 6B.

As described above, because the spot welding robot 2 displaces the spot welding gun 10 to welding points one after another to perform a spot weld, a regenerative electric power is repeatedly generated in a comparatively short time. Because the movement of the spot welding gun 10 is performed by a short pitch, a large regenerative electric power does not occur and thus the regenerative electric power can be accumulated in a capacitor.

Therefore, the control device 4 according to the present embodiment includes the capacitor unit 33 that accumulates the regenerative electric power. As a result, because a regenerative electric power can be effectively used at comparatively low cost, electric power saving can be achieved.

As illustrated in FIGs. 2 and 3, the capacitor unit 33 is connected to the DC bus bars 6A and 6B between the converter unit 31 and the motor drive unit 32 to accumulate the regenerative electric power from the motor drive unit 32.

The capacitor unit 33 includes, for example, a capacitor C10 and accumulates a regenerative electric power in the capacitor C10. The capacitor C10 is, for example, a comparatively cheap electrolytic capacitor. A capacitor having high electricity storage efficiency such as an electric double layer capacitor can be used as the capacitor C10.

The capacitor unit 33 is attached to the control device 4 in such a manner that the capacitor unit can be attached to and detached from the motor drive unit 32. Therefore, when maintenance is performed, for example, the exchange of the capacitor unit 33 or the capacitor C10 can be easily performed.

Operations of the spot welding robot 2 are different depending on workpieces, and thus the sizes of regenerative electric power generated from the motor M are different. Therefore, the capacitor unit 33 having an appropriate electrostatic capacity can be connected to the motor drive unit 32 by detachably connecting the capacitor unit 33 to the control device 4. For example, there is used the capacitor C10 that has an electrostatic capacity in which a ratio of a regenerative electric power not consumed by the regenerative power processing unit 52 to a regenerative electric power generated from the motor M is, for example, 80% to 100%.

Herein, a configuration example of the capacitor unit 33 will be explained. FIG. 5 is a schematic diagram illustrating a configuration example of the capacitor unit 33. As illustrated in FIG. 5, the capacitor unit 33 can be attached to or detached from a case 50 of the control device 4 from the outside. Moreover, the control unit 30, the converter unit 31, and the motor drive unit 32 are placed in the case 50 of the control device 4.

The capacitor unit 33 includes the capacitor C10 and a capacitor holding unit 61, and is connected to a connector 72 supported by a supporting unit 71 inside the case 50. The capacitor holding unit 61 includes a cylindrical first holding member 63 that has a plurality of protrusions formed on its outer circumference and a second holding member 64 that is connected to the first holding member 63 by using fastening members 65.

The first holding member 63 is a cylindrical member that has an inside diameter substantially the same as the outer circumference of the capacitor C10, and is mounted at the outer circumference of the capacitor C10. The plurality of protrusions formed at the outer circumference of the first holding member 63 and the leading end of the second holding member 64 are provided with through-holes formed at the corresponding positions. The fastening members 65 are inserted into through the through-holes to connect the first holding member 63 to the second holding member 64.

A through-hole larger than the outside diameter of the capacitor C10 is formed in the leading end of the second holding member 64. The capacitor C10 is inserted into through the through-hole. Moreover, a protrusion having a through-hole is formed in the bottom end of the second holding member 64. The protrusion is attached to the case 50 by using a fastening member 66.

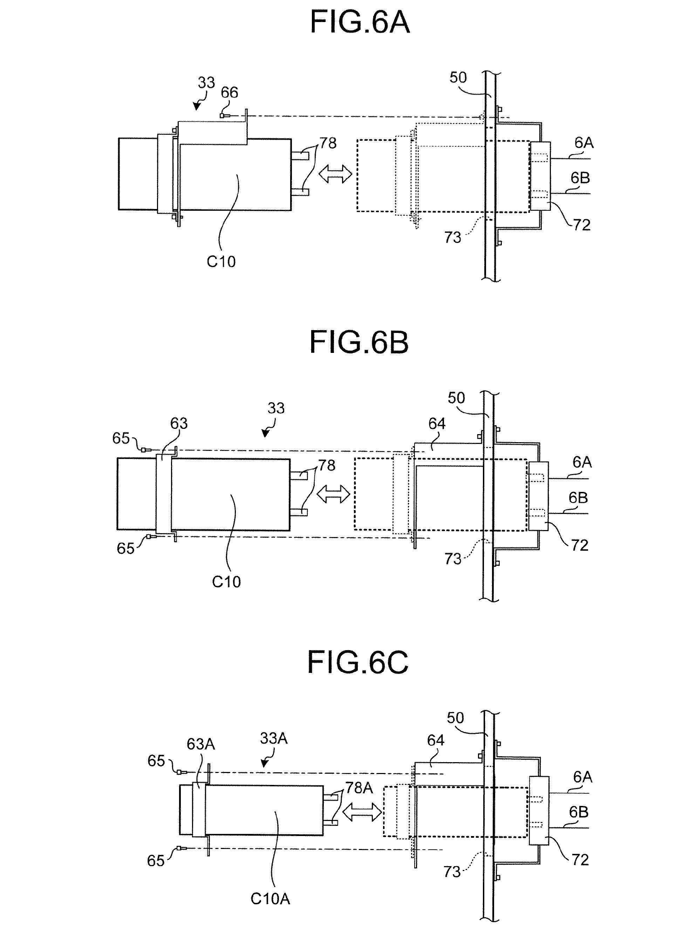

FIGs. 6A to 6C are diagrams explaining attachment and detachment of the capacitor unit. As illustrated in FIG. 6A, the attachment of the capacitor unit 33 is performed by inserting the bottom end of the capacitor C10 into an opening 73 formed in the case 50 and connecting a terminal 78 of the capacitor C10 to the connector 72, in the state where the capacitor C10 is attached to the capacitor holding unit 61.

The attachment of the capacitor unit 33 can be further performed as illustrated in FIG. 6B. That is to say, the second holding member 64 is attached to the case 50 and the capacitor C10 is attached to the first holding member 63. Then, the attachment is performed by inserting the bottom end of the capacitor C10 into the opening 73 formed in the case 50 and connecting the terminal 78 of the capacitor C10 to the connector 72, in the state where the capacitor C10 is attached to the first holding member 63. After that, the first holding member 63 and the second holding member 64 are coupled by the fastening member 65.

For example, as illustrated in FIG. 6C, a capacitor unit 33A that includes a capacitor C10A having an electrostatic capacity different from that of the capacitor unit 33 can be attached to the control device 4 in place of the capacitor unit 33.

More specifically, the second holding member 64 is attached to the case 50 and the capacitor C10A is attached to a first holding member 63A. Then, the attachment is performed by inserting the bottom end of the capacitor C10A into the opening 73 formed in the case 50 and connecting a terminal 78A of the capacitor C10A to the connector 72, in the state where the capacitor C10A is attached to the first holding member 63A. After that, the first holding member 63A and the second holding member 64 are coupled by the fastening member 65.

The size of the capacitor C10A is smaller than that of the capacitor C10. Moreover, the connector 72 is configured to be able to connect the capacitors C10 and C10A whose terminal shapes and terminal intervals are different.

As described above, in the spot welding system 1 according to the present embodiment, the capacitor unit 33 can be protruded from the case 50 of the control device 4 to the outside and can be attached to the control device 4. Therefore, as compared with the case where the capacitor unit 33 is placed in the case 50, the size of the case 50 can be reduced.

Moreover, because the capacitor unit 33 is configured to be attachable to or detachable from the control device 4, the capacitor unit 33 having an electrostatic capacity according to the size of a regenerative electric power can be easily attached.

Therefore, when maintenance is performed, the exchange of the capacitor unit 33 or the capacitor C10 can be easily performed. Moreover, the capacitor unit 33 having an optimum electrostatic capacity according to a workpiece welded by the spot welding system 1 can be attached.

In the example illustrated in FIG. 5, it has been explained that the capacitor unit 33 is attached to the control device 4 in such a manner that a part of the capacitor unit 33 is protruded from the opening 73 formed in the case 50 of the control device 4 to the outside of the case 50. However, the embodiment is not limited to this configuration. For example, the embodiment may have a configuration that the capacitor unit 33 is detachably placed inside the case 50 of the control device 4.

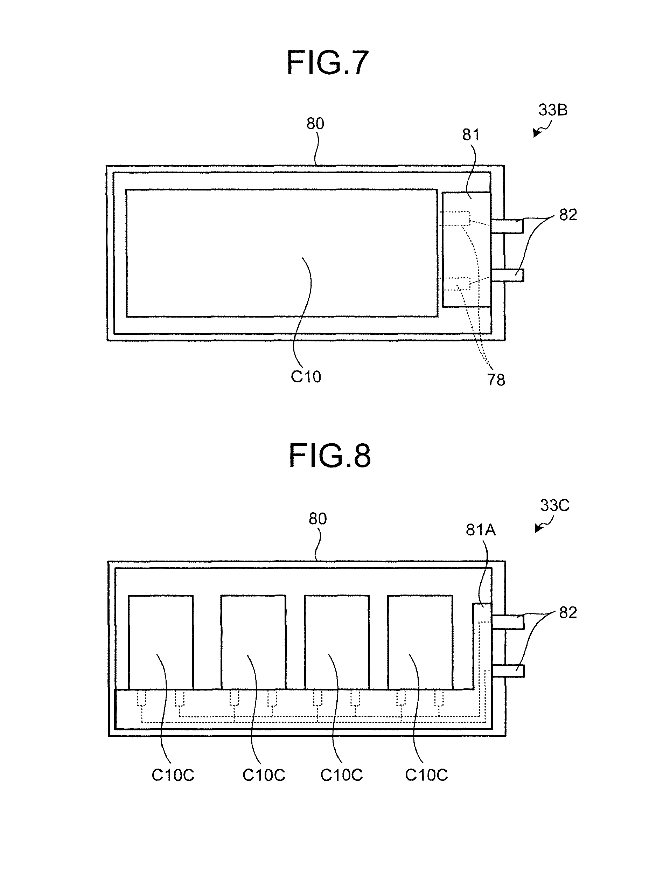

The configuration of the capacitor unit 33 is not limited to the configuration of FIG. 5. Therefore, if the capacitor unit 33 can be attached to and detached from the control device 4, the capacitor unit 33 may have any configuration. For example, the capacitor unit 33 may have the configuration of FIG. 7. FIGs. 7 and 8 are diagrams illustrating other configuration examples of the capacitor unit.

In a capacitor unit 33B illustrated in FIG. 7, the capacitor C10 is placed inside a case 80 in the state where the terminal 78 of the capacitor C10 is connected to a connector 81 formed on the bottom of the case 80. A terminal 82 electrically connected to the connection terminal of the connector 81 is connected to the outside bottom of the case 80. The terminal 82 is detachably connected to the connector 72 of the control device 4.

For example, like a capacitor unit 33C illustrated in FIG. 8, the capacitor unit can have a configuration that an electrostatic capacity for accumulating a regenerative electric power can be changed. More specifically, in the capacitor unit 33C, a connector 81A by which a plurality of capacitors C10C can be attached and detached is placed in the case 80. Therefore, the electrostatic capacity of the capacitor unit 33C can be changed by adjusting the number of the capacitors C10C to be connected to the connector 81A.

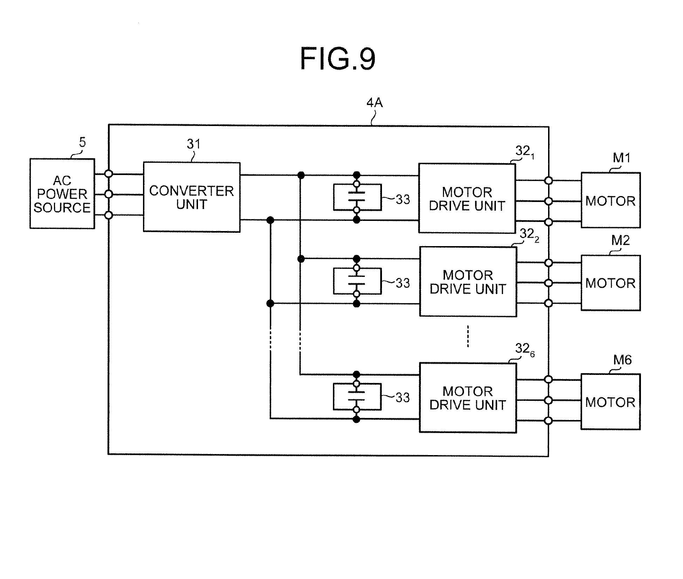

In the embodiment, it has been explained that the capacitor unit 33 is shared by the plurality of motor drive units 32₁ to 32₆. The embodiment is not limited to this configuration. For example, as in a control device 4A illustrated in FIG. 9, the capacitor unit 33 can be arranged for each of the motor drive units 32. FIG. 9 is a diagram illustrating an example of the control device 4A.

By doing so, the capacitor units 33 can be respectively arranged next to the motor drive units 32 and thus power loss in the DC bus bars 6A and 6B can be reduced. Moreover, an electrostatic capacity can be set in accordance with a regenerative electric power of the motor M corresponding to each of the capacitor units 33.

In the embodiment, the six-axis spot welding robot 2 has been explained. The embodiment is not limited to the configuration. The spot welding robot 2 may be a spot welding robot that has a configuration other than the six-axis configuration. For example, the spot welding robot 2 may be a seven-axis spot welding robot.

## Claims

1. A spot welding system (1) comprising:
a spot welding robot (2) that has a plurality of joint axes (J1 to J6) and includes a plurality of motors (M1 to M6) in correspondence with the joint axes (J1 to J6); and
a control device (4, 4A) that drives the motors (M1 to M6) to control the spot welding robot (2), wherein
the control device (4, 4A) includes a capacitor (C10, C10A, C10C) that accumulates regenerative electric power generated from the motor (M1 to M6).

2. The spot welding system (1) according to claim 1, wherein the capacitor (C10, C10A, C10C) is detachably attached to the control device (4, 4A).

3. The spot welding system (1) according to claim 2, wherein the capacitor (C10, C10A, C10C) is detachably attached to the control device (4, 4A) via an opening (73) formed in a case (50) of the control device (4, 4A).

4. The spot welding system (1) according to claim 3, wherein the capacitor (C10, C10A, C10C) is attached to the control device (4, 4A) in a state where the capacitor is protruded from the case of the control device (4, 4A) to an outside.

5. The spot welding system (1) according to any one of claims 1 to 4, wherein the capacitor (C10, C10A, C10C) is shared by the plurality of motors (M1 to M6).

6. The spot welding system (1) according to any one of claims 1 to 5, wherein the control device (4, 4A) is configured to be able to attach the capacitor (C10, C10A, C10C) whose electrostatic capacities for accumulating the regenerative electric power are different.

7. The spot welding system (1) according to any one of claims 1 to 6, wherein
the control device (4, 4A) includes:
a converter unit (31) that converts AC power into DC power; and
a plurality of motor drive units (32) that convert the DC power from the converter unit (31) into AC power and respectively supply the AC power to the plurality of motors (M1 to M6), and
the capacitor (C10, C10A, C10C) is detachably attached to DC bus bars (6A and 6B) that connect the converter unit (31) and the motor drive units (32).

8. A control device (4, 4A) for a spot welding robot comprising:
a motor drive unit (32) that drives motors (M1 to M6) that are respectively provided corresponding to joint axes (J1 to J6) of a spot welding robot (2); and
a capacitor (C10, C10A, C10C) that accumulates regenerative electric power generated from the motor (M1 to M6).
